# EUROPEAN PATENT APPLICATION

(11) **EP 2 141 705 A1**
(43) Date of publication of application: **06.01.2010**
(21) Application number: 07737001.3
(22) Date of filing: 30.03.2007
(51) Int. Cl.: G11B 27/10, G10K 15/02, G11B 20/10, G11B 27/34

(54) **REPRODUCING APPARATUS AND PROGRAM**

(71) Applicant: Pioneer Corporation, Tokyo 153-8654 (JP)
(72) Inventor: KAMEI, Kazuo, Tokorozawa-shi Saitama 359-8522 (JP); KAWAMI, Hiroshi, Tokorozawa-shi Saitama 359-8522 (JP); MURAI, Yuji, Kawasaki-shi Kanagawa 212-0031 (JP)
(74) Representative: Haley, Stephen
(86) International application number: PCT/JP2007/000344
(87) International publication number: WO 2008/126142

(57) **Abstract**

A twin-type reproducing apparatus with excellent usability and so forth is provided. Provided herein is a reproducing apparatus (1) having: a reproducing unit capable of reproducing two contents at the same time; two jog dials (21A, 21B) capable of performing a reproduction control of each of the two contents to be reproduced; a liquid crystal display (D) for displaying a content list of a plurality of contents stored in an inserted device; operators (41 to 44) for selecting contents to be reproduced and to be operated from the displayed content list, respectively; and operators (45, 46) for sorting the selected contents into two operation mechanisms. The result of the sort of the contents is displayed on the liquid crystal display (D).

## Description

### TECHNICAL FIELD

The present invention relates to a reproducing apparatus having two operation mechanisms for performing reproduction control for two contents and a program therefor.

### BACKGROUND ART

There has been known a reproducing apparatus having two operation mechanisms as equipment dealt by DJs who give music performance in a club or the like (for example, Non-Patent Document 1).

Further, there has been known a reproducing apparatus which is connected to two mobile music players and which is capable of reproduction control of contents read from respective music players with two operation mechanisms (for example, Non-Patent document 2). The reproducing apparatus uses displays mounted on the music players as display unit displaying content names so as to make the apparatus smaller.
[Non-Patent Document 1] Numark, DVD01,
   http://www.numark.com/index.html?
   http://www.numark.com/products/product_view.php?v=over
   view&n=154
[Non-Patent Document 2] Numark, iDJ,
   http://www.numark.jp/index.html?
   http://www.numark.jp/products/product_view_overview_132. html

### DISCLOSURE OF THE INVENTION

### [Problems to be Solved]

However, this kind of twin-type reproducing apparatus has specification such that two reproducing apparatuses are merely combined, in which a display unit for selecting a content to be a reproduced object (an operated object for reproduction control) is provided independently, leading to a poor usability.

An object of the invention is, in view of the above problem, to provide a twin-type reproducing apparatus with high usability and a program therefor.

### [Means to Solve the Problems]

A reproducing apparatus of the invention has: a reading unit that reads an information recording medium recorded with a plurality of contents therein; a reproduction unit that can reproduce two of the contents simultaneously; an operation unit that is capable of reproduction control of the two contents reproduced by the reproduction unit; a content list generation unit that generates a content list of a plurality of the contents; a content list display unit that displays the generated content list on a display screen; a content selection unit that selects contents to be operated objects by the two operation mechanisms from the displayed content list; a content sort unit that sorts the contents read by the reading unit to the two operation mechanisms based on a selection result of the content selection unit; and a sort result display unit that displays the sort result by the content sort unit on the display screen.

With this structure, as the content list for selecting the two contents reproduced by the reproduction unit is displayed on the display screen, a user can perform a selection operation and a sort operation by seeing only the display screen, thereby operation error is avoided and operability will be enhanced. Also, the sort result of the contents to the two operation mechanisms is displayed on the same display screen, the user can acknowledge which operation mechanism can be operated, leading to high usability. Further, as the two operation mechanisms for reproduction control to the reproduced contents are provided per content, independent reproduction control can be performed. Therefore, various music and video expressions can be achieved.

In the reproducing apparatus described above, it is preferable that the reading unit include a plurality of reading mechanisms, the content list generation unit generate the content list per a plurality of information recording mediua read by a plurality of the reading mechanisms, the content selection unit designate the information recording medium, display the content list for the information recording medium on the content list display unit, and select contents to be operated objects for the two operation mechanisms from the displayed content list.

With this structure, as a plurality of reading mechanisms are provided, it is possible to select contents to be operated objects from a number of contents. Further, as the content list is generated per information recording medium, it is easy to retrieve the content in a case that each information recording medium is separated by category or by use.

In the reproducing apparatus described above, it is preferable that it further have an operation mechanism index unit that indexes the operation mechanism sortable by the content sort unit based on a data type of the content read by each reading mechanism.

With this structure, there are instances that two contents from a same information recording medium can not be reproduced simultaneously depending on data type of the contents. Even in such a case, as a sortable operation mechanism is indexed, it is possible to sort according to the index. Therefore, the user does not need to worry about the data type of the contents.

In the reproducing apparatus described above, it is preferable that a plurality of the reading mechanisms have one or more reading mechanisms that read the information recording medium recorded with the content which can be controlled in reproduction by either one of the two operation mechanisms.

With this structure, as the contents read by one or more reading mechanisms can be controlled in reproduction by both operation mechanisms, the user can use without worrying whether sort can be performed or not.

In the reproducing apparatus described above, it is preferable that the sort result display unit show the sorted operation mechanism in the content list displayed by the content list display unit.

With this structure, it is possible to acknowledge a sort destination and a sorted content at the same time because the sorted operation mechanism is displayed in the content list. Further, the display screen can be used for displaying the content list effectively because a display area for displaying the sort result is not needed.

In the reproducing apparatus described above, it is preferable that the sort result display unit show the operation mechanism sorted by additional information to each content title or a display mode of each content title.

With this structure, it is possible to display the sort destination of each content comprehensively.

In the reproducing apparatus described above, it is preferable that it further have a display type selection unit that selects either one of a folder display type displaying the content list according to a hierarchy structure of the contents stored in the information recording medium and a category display type displaying the content list by category based on the additional information added to each content, and that the content list display unit selectively display the content list generated by the content list generation unit according to a selection result by the display type selection unit.

With this structure, it is possible to select either one of the folder display type and the category display type according to user's preference. In a case that contents are stored in the information recording medium in consideration of use application in advance, if the folder display type is selected, the type is convenient for the user. In a case that contents are stored in the information recording medium at random, if the category display type is selected, the contents are sorted by category, thereby the type is convenient for the user.
Content lists may be preliminary generated before content lists of both of the display types are selected by the display type selection unit, or either one of the content lists may be generated based on a selection result after selecting display type.

In the reproducing apparatus described above, it is preferable that the operation unit include a jog dial that adjusts a reproduction state according to rotation amount of a rotating body thereof as operation mechanism.

With this structure, as the jog dial is provided, various effects can be achieved.

In the reproducing apparatus described above, it is preferable that the content list display unit be disposed between the two operation mechanisms.

With this structure, as the content list is displayed at a center, the list can easily be seen and the two operation mechanisms are easy to operate.

A program of the invention allows a computer to function as each unit in the reproducing apparatus described above.

By implementing the program, it is possible to provide a twin-type reproducing apparatus having high usability.

### BRIEF DESCRIPTION OF THE DRAWINGS

FIG. 1A is a plan view of a reproducing apparatus according to one embodiment of the invention and FIG. 1B is an elevation view thereof.
FIG. 2 is a block diagram of the reproducing apparatus.
FIG. 3 is an exemplary diagram of a display at the time of file browse.
FIG. 4 is an exemplary diagram of the display at the time of ID3 browse.
FIG. 5 is a screen transition diagram from FIG. 4.
FIG. 6 is a screen transition diagram from FIG. 5.
Fig. 7 is a screen transition diagram from FIG. 6.
Fig. 8 is a screen transition diagram from FIG. 7.
Fig. 9 is a screen transition diagram from FIG. 8.
Fig. 10 is a screen transition diagram from FIG. 9.

### [Reference Numerals]

- 1: reproducing apparatus
- 10: central operation area
- 20A: A-side operation area
- 20B: B-side operation area
- 21: jog dial
- 22: fader
- 31: browse switching button
- 41: device selection button
- 42: encoder
- 43: left button
- 44: right button
- 45: A-side load button
- 46: B-side load button
- 51: A-side disc insertion section
- 52: B-side disc insertion section
- 55: USB slot
- D: liquid crystal display

### BEST MODES FOR CARRYING OUT THE INVENTION

A reproducing apparatus and a program therefor according to one embodiment of the invention will be explained in detail hereinbelow with reference to accompanying drawings. In the embodiment, the reproducing apparatus of the invention adapted to DJ equipment used for music performance by DJs is exemplified.

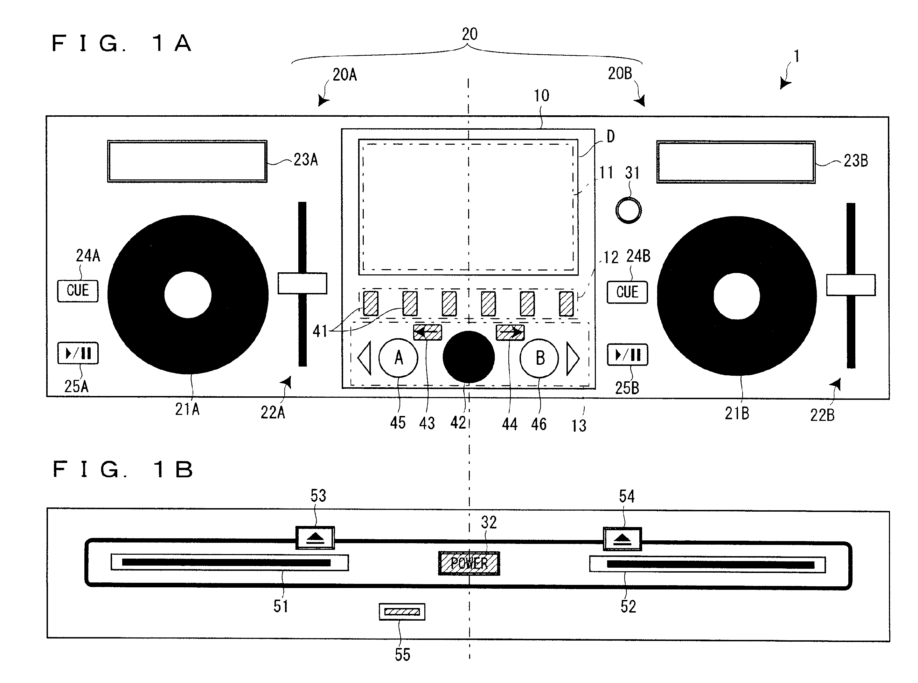

FIG. 1A is a plan view of a reproducing apparatus 1 of the invention and FIG. 1B is an elevation view thereof. As shown in FIG. 1A, a top surface of the reproducing apparatus 1 is divided into a central operation area 10 and a side operation area 20. The central operation area 10 has a liquid crystal display unit 11, a device selection unit 12, a selection/sort unit 13. Selection and sort of tracks (contents) for reproduction control at both side operation areas 20A and 20B is performed with operations of these respective units.

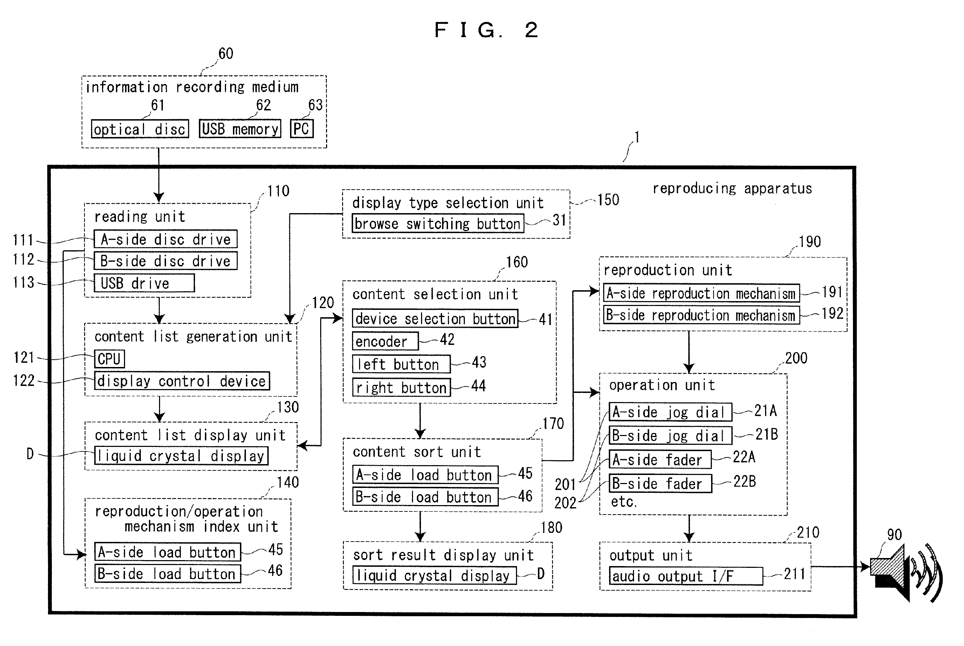

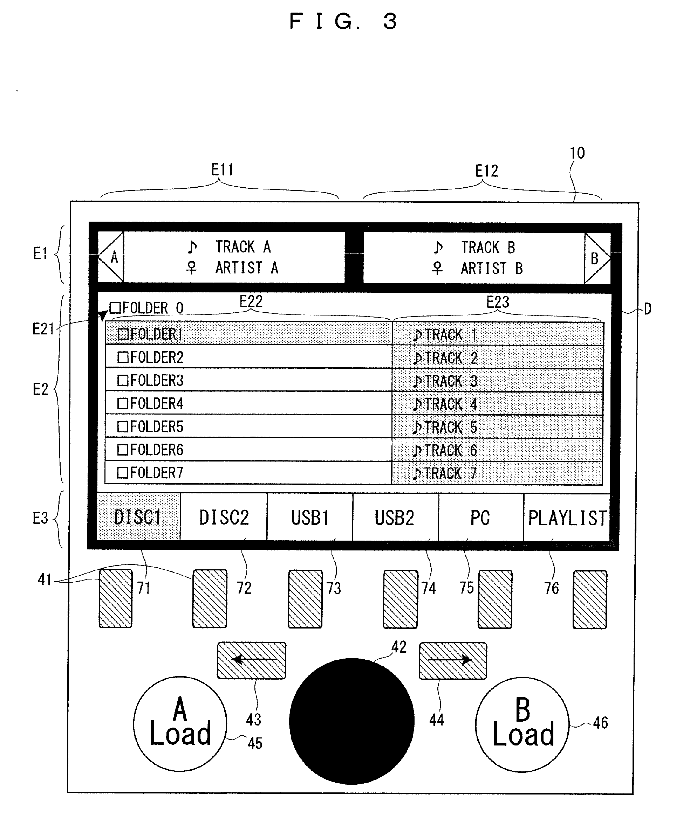

The liquid crystal display unit 11 is made up of a liquid crystal display D. Also, the device selection unit 12 has a plurality of device selection buttons 41 which is used for selecting a device (see an information recording medium 60, FIG. 2) to be a generated object of a content list (see a second area E2 in FIG. 3) displayed on the liquid crystal display D. Further, the selection/sort operation unit 13 has an encoder 42, a left button 43, a right button 44, an A-side load button 45 and a B-side load button 46.

The encoder 42 is used to instruct a cursor to move in the content list or move to a lower hierarchy. The left button 43 is used to instruct to move to an upper hierarchy in the content list and the right button 44 is used to instruct to move to a lower hierarchy of the content list. The A-side load button 45 is used to sort a track selected from the content list to an A-side reproduction mechanism 191 and an A-side operation mechanism 201, and the B-side load button 46 is used to sort a track selected from the content list to a B-side reproduction mechanism 192 and a B-side operation mechanism 202 (see FIG. 2).

The side operation area 20 has the A-side operation area 20A located at the left area and the B-side operation area 20B located at the right area in the figure. The A-side operation area 20A has a jog dial 21A, a fader 22A, an auxiliary display 23A, a cue button 24A and a play/pause button 25A. The jog dial 21A is so configured that it can adjust a reproduction state (such as reproduction volume) based on a user's operation or apply an effect (generation of scratch sound or the like) by detecting the user's operation (press and rotation). The fader 22A is used to perform volume control (gain control of a power amplifier). The auxiliary display 23A displays a title, reproduction time, BPM and the like of a track being reproduced.

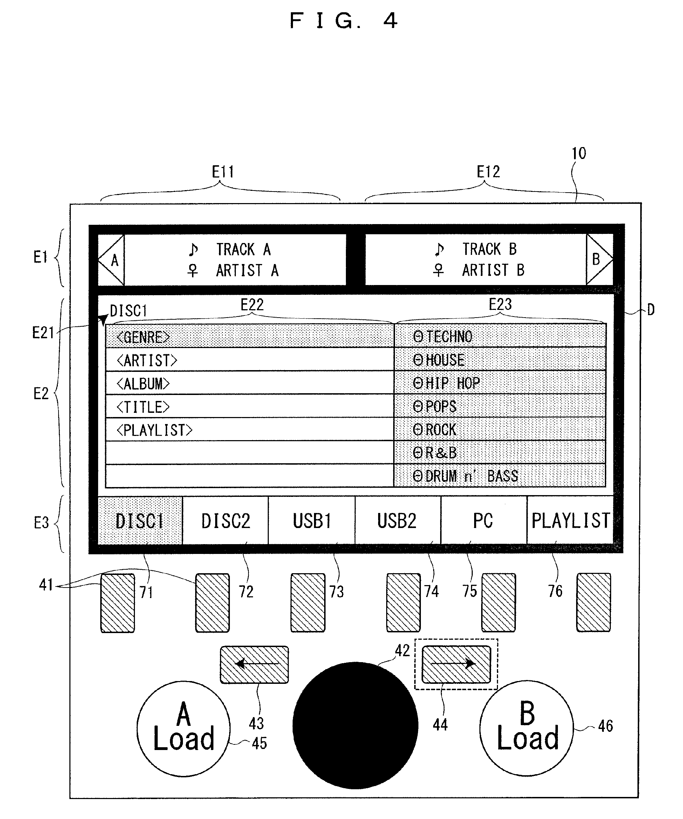

A description of the B-side operation area 20B is omitted because a structure thereof is identical to that of the A-side operation area 20A, except that a browse switching button 31 is provided in a part of the B-side operation area 20B (at a position adjacent to the central operation area 10). The browse switching button 31 is used to switch display types of the content list to a "file browse (folder display type)" or an "ID3 browse (category display type)" (see FIGs. 3 and 4). Details thereof will be explained later.

Further, as shown in FIG. 1B, the reproducing apparatus 1 has a power button 32 for switching ON/OFF of a power, an A-side disc insertion section 51, a B-side disc insertion section 52, an A-side eject button 53, a B-side eject button 54 and a USB slot 55 (a first USB slot) at the front side thereof.

The A-side disc insertion section 51 and the B-side disc insertion section 52 are provided at the left side and the right side of the reproducing apparatus 1, corresponding to positions of the A-side operation area 20A and the B-side operation area 20B, and each of which is inserted with an optical disc 61 (see FIG. 2) such as a DVD or a CD. The A-side eject button 53 and the B-side eject button 54 are respectively used to eject optical discs from the A-side disc insertion section 51 and the B-side disc insertion section 52. A USB memory 62 (see FIG. 2) such as a USB flash memory or a USB hard disc is inserted in the USB slot 55.

Though not especially shown, a USB slot (a second USB slot) having the same specification of the USB slot 55 and a USB slot (a PC slot) dedicated for connecting a personal computer 63 (refereed to a "PC 63", hereinafter) are provided on a back side of the reproducing apparatus 1. The above A-side disc insertion section 51, the B-side disc insertion section 52, the USB slot 55, the two USB slots on the back side correspond to five buttons of the six device selection buttons 41, and one of the devices to be a generated object of the content list is selected from devices respectively inserted therein. The remaining one device selection button 41 corresponds to a play list preliminary made up by a user (details thereof will be explained later).

Referring to FIG. 2, a control structure of the reproducing apparatus 1 will be explained. As shown in FIG. 2, the reproducing apparatus 1 has a reading unit 110, a content list generation unit 120, a content list display unit 130, a reproduction/operation mechanism index unit 140, a display type selection unit 150, a content selection unit 160, a content sort unit 170, a sort result display unit 180, a reproduction unit 190, an operation unit 200 and an output unit 210.

The reading unit 110 is used to read the information recording medium 60, and has reading mechanisms such as an A-side disc drive 111, a B-side disc drive 112 and a USB drive 113. The optical disc 61 or the USB memory 62 are used as the information recording medium 60, as described above. The reading unit 110 is also connected to the PC 63 via a cable having a USB terminal and is capable of reading contents stored in a hard disc of the PC 63. The A-side disc drive 111 and the B-side disc drive 112 read the optical discs 61 inserted in the A-side disc insertion section 51 and the B-side disc insertion section 52, respectively. The USB drive 113 physically has three drives and reads input data from the USB memory 62 inserted in each of the USB slots described above or from the PC 63.

The content list generation unit 120 is used to generate the content list of tracks read from the information recording medium 60, and has a CPU 121 to control the reproducing apparatus 1 integrally and a display control device 122 to perform display control for the liquid crystal display D as main devices. The content list generation unit 120 generates the content list per information recording medium 60 read by a plurality of reading mechanisms.

The content list display unit 130 is used to display the content list of the information recording medium 60 selected by the content selection unit 160 among content lists generated by the content list generation unit 120 on the liquid crystal display D (a display screen). In other words, a content list is displayed on the liquid crystal display D regardless whichever the reading mechanism reads the information recording medium 60.

The reproduction/operation mechanism index unit 140 is used to index the reproduction mechanisms 191, 192 and the operation mechanisms 201, 202 which can be sorted by the content sort unit 170 based on a data type of the contents read by each reading mechanism. In the reproducing apparatus 1 of the embodiment, the contents can be reproduced only by corresponding reproduction mechanisms 191 and 192 in a case that the data type of the contents stored in the information recording medium 60 is other than MP3. Accordingly, whether the data type is MP3 or not is determined for the optical discs 61 read by the A-side disc drive 111 and the B-side disc drive 112. When the data type is MP3, both of the reproduction mechanisms and the operation mechanisms are indexed as sortable reproduction mechanisms 191, 192 and operation mechanisms 201, 202. In other words, when the data type is MP3, the contents read by the A-side disc drive 111 can be reproduced/operated by the B-side reproduction mechanism 192 and the B-side operation mechanism 202. When the data type is not MP3, only the reproduction/operation mechanisms corresponding to the read drive are indexed as sortable reproduction/operation mechanisms. The index is performed by lighting up the A-side load button 45 and/or the B-side load button 46 (see FIG. 1). More specifically, it means that the load buttons 45 and 46 which are not lit up at the time of operation for content selection can not be designated as sort destination. It is supposed that the information recording medium 60 read by reading mechanisms other than the A-side disc drive 111 and the B-side disc drive 112 has MP3 data type. Therefore, the contents read from the information recording medium 60 indexes both reproduction/operation mechanisms as sortable reproduction/operation mechanisms, without determining the data type.

The display type selection unit 150 is used to select either one of the "file browse (the folder display type)" and the "ID3 browse (the category display type)" as display type of the content list, and has the browse switching button 31 as a main device thereof. When the "file browse" is selected, the content list is displayed according to a hierarchy structure of the contents stored in the information recording medium 60. When the "ID3 browse" is selected, the content list is displayed by category based on additional information (ID3 tag) added to each content.

The content selection unit 160 is used to select contents to be reproduced objects by the two reproduction mechanisms 191, 192 and to be an operated object by the two operation mechanisms 201, 202 from the content list displayed on the content list display unit 130. More specifically, the content list for the information recording medium 60 is displayed on the content list display unit 130 by assigning the information recording medium 60, and the contents to be reproduced objects of the two reproduction mechanisms 191, 192 and to be operated objects of the two operation mechanisms 201, 202 from the displayed content list. A selection operation is performed with the device selection buttons 41, the encoder 42, the left button 43 and the right button 44. Details thereof will be explained later with reference to display examples (FIGs. 3-10) of the liquid crystal display D.

The content sort unit 170 is used to sort the contents read by the reading unit 110 to the two reproduction mechanisms 191, 192 and the two operation mechanisms 201, 202 according to a selection result of the content selection unit 160, and has the A-side load button 45 and the B-side load button 46 as main devices thereof. As described above, it is possible to sort to the reproduction mechanisms 191, 192 and the two operation mechanisms 201, 202 (reproduction/operation mechanisms corresponding to the load buttons 45 and 46 being lit) indexed by the reproduction operation mechanism index unit 140 as sort destination.

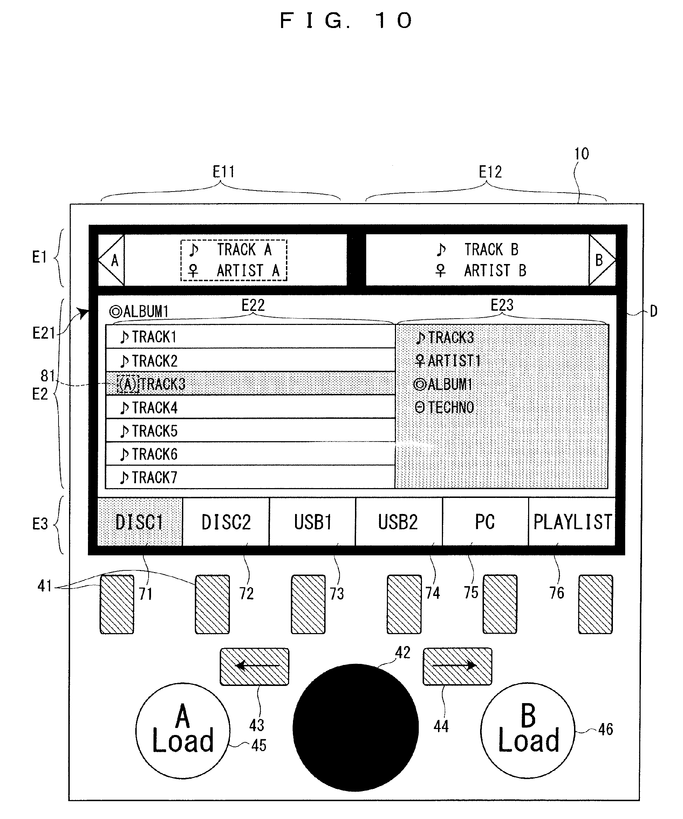

The sort result display unit 180 is used to display the sort result by the content sort unit 170 on the liquid crystal display D (a display screen). More specifically, the sort result is displayed by adding a symbol ("A" or "B") showing the sorted reproduction/operation mechanisms in the content list displayed on the content list display unit 130 (see numeral 81 in FIG. 10).

The reproduction unit 190 is used to reproduce contents and has two reproduction mechanisms (the A-side reproduction mechanism 191 and the B-side reproduction mechanism 192) which can reproduce simultaneously. More specifically, the reproduction unit 190 includes an audio signal reproduction processor (not shown) having a decoder, converter and the like.

The operation unit 200 is used to perform reproduction control to each content reproduced by each of the reproduction mechanisms 191, 192, and has the two operation mechanisms 201, 202 corresponding to the two reproduction mechanisms 191, 192. In this embodiment, the A-side operation mechanism 201 has the A-side jog dial 21A, the A-side fader 22A, the A-side CUE button 24A and the A-side play/pause button 25A. The B-side operation mechanism 202 has the B-side jog dial 21B, the B-side fader 22B, a B-side CUE button 24B and a B-side play/pause button 25B.

The output unit 210 is used to output output audio signals reflected with the reproduction control result of the operation unit 200 to the reproduced tracks by the reproduction unit 190 to an output speaker 90 and the like, and has an audio output interface 211 (an analog output terminal or a digital output terminal) as a main device thereof.

Referring to FIGs. 3 to 10, display examples of the liquid crystal display D and an operation method of the central operation area 10 will be explained. FIG. 3 shows a display example of the "file browse". A summary structure of a GUI and a physical interface of the liquid crystal display D in common in both browses will be explained. Firstly, the GUI of the liquid crystal display D provided in an upper area of the central operation area 10. The liquid crystal display D is divided into a first area E1 to a third area E3 in a row direction.

The first area E1 is a reproduction mechanism display area, and titles and artist names of tracks loaded in the A-side reproduction mechanism 191 and the B-side reproduction mechanism 192 are displayed in the A-side display area E11 and the B-side display area E12 thereof.

The second area E2 is a content list display area and has a hierarchy name display area E21, a left window area (a main display area) E22 and a right window area (a sub-display area) E23. A hierarchy name of a hierarchy being currently displayed on the left window area E22 is displayed in the hierarchy name display area E21, items of available hierarchies on which a cursor can move are displayed in the left window area E22, and contents of the item or the ID3 information of the track being selected in the left window area E22 is displayed in the right window area E23.

The third area E3 is a device tab display area, in which six device tabs 71 to 76 are displayed and one of the device tabs selected exclusively is highlighted. In the second area E2 described above, the contents of the device selected here are expanded.

The device tabs are: a "DISC 1" tab 71, a "DISC 2" tab 72, a "USB 1" tab 73, a "USB 2" tab 74, a "PC" tab 75 and a "PLAYLIST" tab 76. The "DISC 1" tab 71 and the "DISC 2" tab 72 correspond to the A-side disc drive 111 and the B-side disc drive 112, respectively. Further, the "USB 1" tab 73 corresponds to a USB drive connected to the USB slot 55, the "USB 2" tab 74 corresponds to a USB drive connected to the USB slot (not shown) on the back side of the reproducing apparatus 1, and the "PC" tab 75 corresponds to the USB drive (for PC) connected to a USB slot (not shown) on the back side of the reproducing apparatus 1, respectively. Further, the "PLAYLIST" tab 76 is adapted to correspond to a non-volatile memory (not shown) storing a play list prepared by the user in the reproducing apparatus 1. The contents read out from the non-volatile memory can be displayed in the second area E2 as content list. This play list can include tracks selected from a content list of the other devices by a predetermined operation.

Next, the physical interface provided in a lower area of the central operation area 10 will be explained. The numeral 41 indicates device selection buttons. Six device selection buttons 41 are provided to correspond to the device tabs 71-76 displayed on the liquid crystal display D.

The numeral 42 indicates the encoder having a push function. The encoder 42 can move a selection cursor in the second area E2 in a vertical direction when the user rotates it. Further, when the user pushes the encoder 42, the selection cursor 42 can be moved to a lower hierarchy of a selected item.

The numeral 43 indicates the left button. When the left button 43 is pushed, the selection cursor can be moved to an upper hierarchy of the selected item. The numeral 44 indicates the right button. When the right button 44 is pushed, the selection cursor can be moved to a lower hierarchy of the selected item.

The numeral 45 indicates the A-side load button. When the A-side load button 45 is pushed, a selected track can be set in the A-side reproduction mechanism 191 and the A-side operation mechanism 201. The numeral 46 indicates the B-side load button. When the B-side load button 46 is pushed, the selected track can be set in the B-side reproduction mechanism 192 and the B-side operation mechanism 202. The A-side load button 45 and the B-side load button 46 are lighted on/off. The selection by the above push operations can be available (the track can be set in each reproduction mechanism 191, 192) only when the buttons 45 and 46 are lit on.

It may be possible to have a structure in which a plurality of tracks are sorted (spooled) to each of the reproduction/operation mechanisms by repeating the selection operation with the above buttons 41-44 and the sort operation with the load buttons 45 and 46. In this case, each of the reproduction mechanisms 191 and 192 can reproduce tracks in an order of being spooled once (or selected from the spooled tracks).

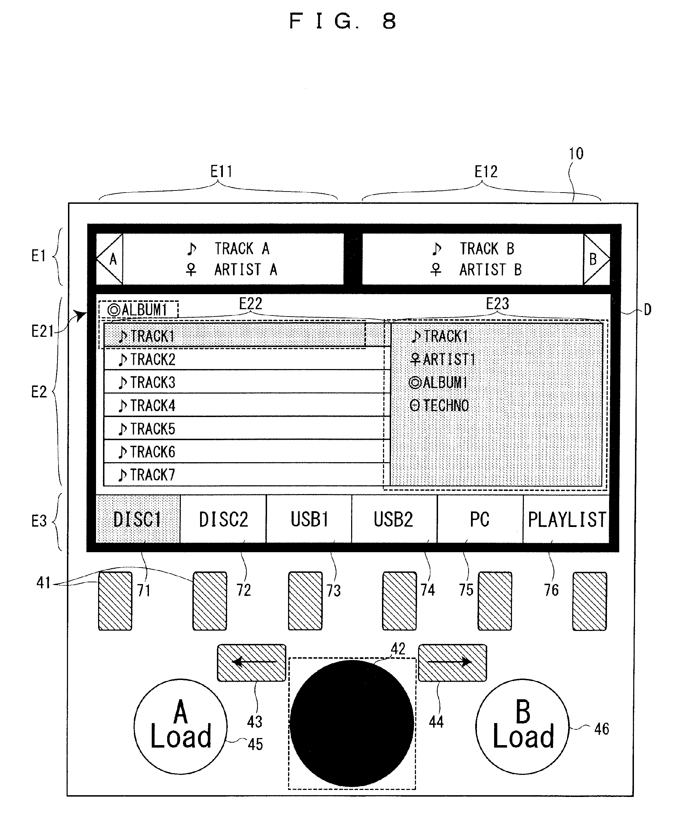

The above explanation is in common for both browses. Referring to FIG. 3, a GUI of the "file browse" will be explained. As display contents of the liquid crystal display D depending on browses are varied only in the second area E2, only the second area E2 will be explained. A folder name currently being displayed in the left window area E22 is displayed in the hierarchy name display area E21 of the second area E2 at the "file browse". The contents of the folder are displayed in the left window area E22, and the contents of the selected folder are displayed in the right window area E23. In a case that a final hierarchy is displayed in the left window area E22, ID3 information of the track is displayed in the right window area E23 (see FIG. 8). Thus, the content list at the "file browse" includes folders of a plurality of hierarchies and the ID3 information.

Referring to screen transitions of FIGs. 4-10, an operation method at the "ID3 browse" will be explained. First of all, referring to FIG. 4, a GUI of the "ID3 browse" will be explained. A device name selected by one of the device selection buttons 41 is displayed in the hierarchy name display area E21 of the second area E2 at the "ID3 browse" in an initial screen (a category selection screen) thereof. A category list is displayed in the left window area E22 and the selection candidates of the selected category are displayed in the right window area E23.

As a category, either one of a "genre", an "artist", an "album", a "title" and a "play list" can be selected. When the "genre" is selected at first, the "artist", the "album", and the "title" are selected sequentially. When the "artist" is initially selected, the "album" and the "title" are selected in sequence. When the "album" is selected, then the "title" is selected. When the "title" is selected, the title is directly selected. Further, the "play list" is firstly selected, selection is performed within the play list recorded in the "DISC 1".

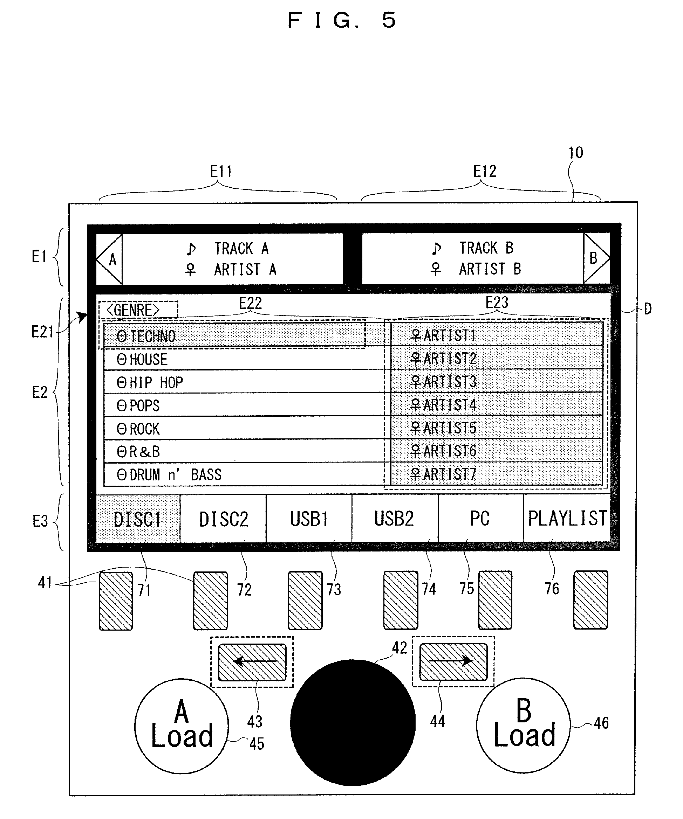

A state of the screen after transition will be explained with reference to FIG. 5, where the right button 44 is pushed in the state shown in FIG. 4 (in the state that the "genre" is designated by the cursor (highlighted). It may be possible to move to the lower hierarchy by pushing the encoder 42. Further, as the left button 43 is pushed, it is possible to move to one upper hierarchy (the category selection screen). When the "genre" is selected as category, the screen transits to a genre selection screen as shown in FIG. 5. A category name ("genre") is displayed in the hierarchy name display area E21. Selection candidates of the genre are displayed in the left window area E22. Selection candidates for the genre are displayed in the right window area E23.

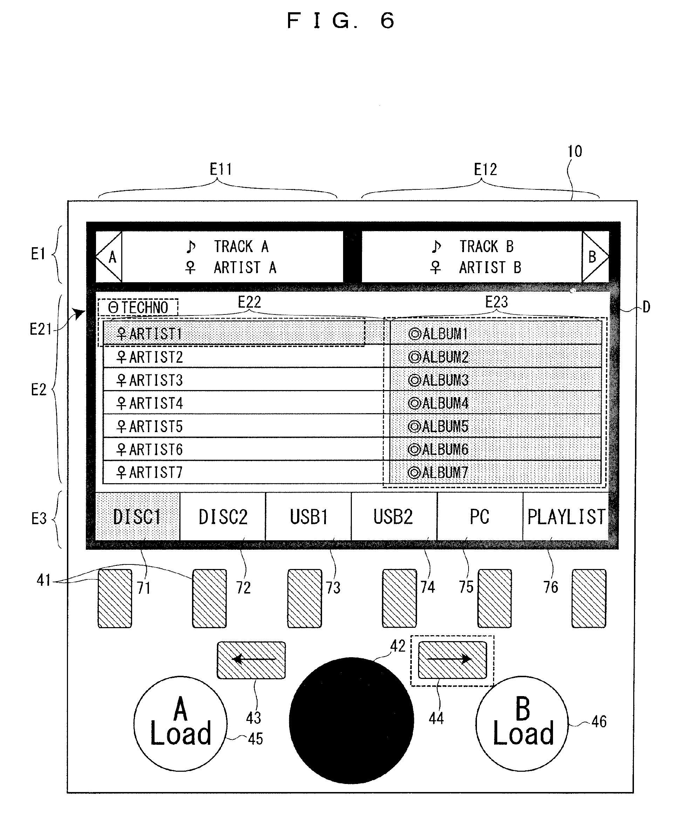

In this case, a screen state after transition will be explained with reference to FIG. 6, where the right button 44 is pushed in the state shown in FIG. 5 (in the state that the "techno" is designated with the cursor). When the "techno" is selected as a genre, as shown in FIG. 6, the screen transits to an artist selection screen. A genre name ("techno") is displayed in the hierarchy name display area E21. Selection candidates of artists associated with techno are displayed in the left window area E22. Album names of the artist are displayed in the right window area E23 as selection candidates.

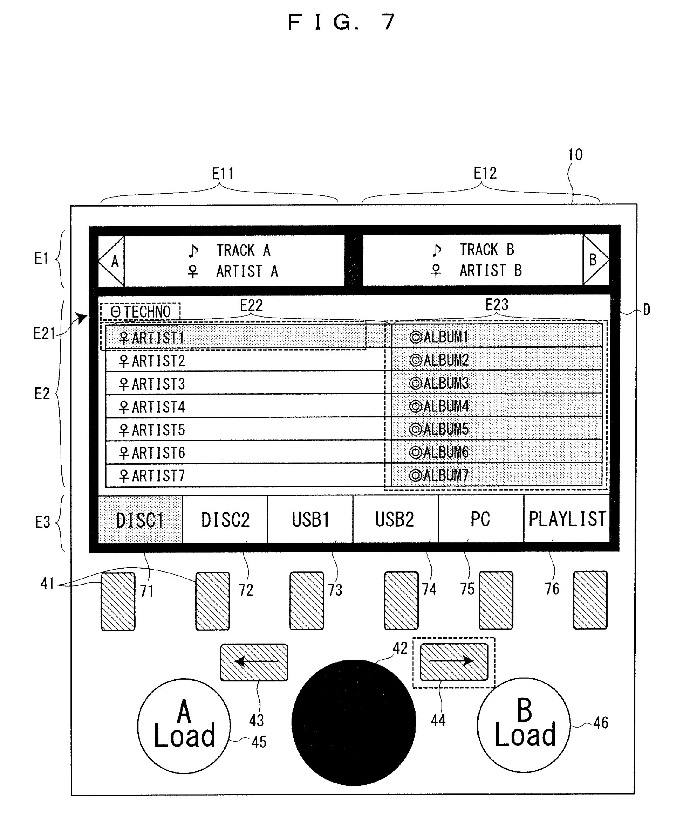

A state of the screen after transition will be explained with reference to FIG. 7, where the right button 44 is pushed in the state shown in FIG. 6 (in the state that an "artist 1" is designated with the cursor). When the "artist 1" is selected as an artist, as shown in FIG. 7, the screen transits to an album selection screen. An artist name ("artist 1") is displayed in the hierarchy name display area E21. Album names of the "artist 1" are displayed in the left window area E22 as selection candidates. Title names recorded in the album are displayed in the right window area E23 as selection candidates.

A state of the screen after transition will be explained with reference to FIG. 8, where the right button 44 is pushed in the state shown in FIG. 7 (in the state that the "album 1" is designated with the cursor). When the "album 1" is selected as an album, as shown in FIG. 8, the screen transits to a title selection screen. An album name ("album 1") is displayed in the hierarchy name display area E21. Title names recorded in the "album 1" are displayed as selection candidates in the left window area E22. ID3 information of the title is displayed in the right window area E23.

In the title selection screen, the title name, the artist name, the album name and the genre name are displayed as ID3 information, but it may be also possible to display a comment input by the user per title or artist. The comment information can be stored in the non-volatile memory (not shown) in the reproducing apparatus 1 or in a predetermined area of the information recording medium 60. It may be also possible to record usage history of each content at selecting, sorting, or stopping reproduction of the content, and to display it as usage history information of each content. Further, it may be possible to display information such as BPM or key information which can be detected automatically from content data of the track, together with the ID3 information.

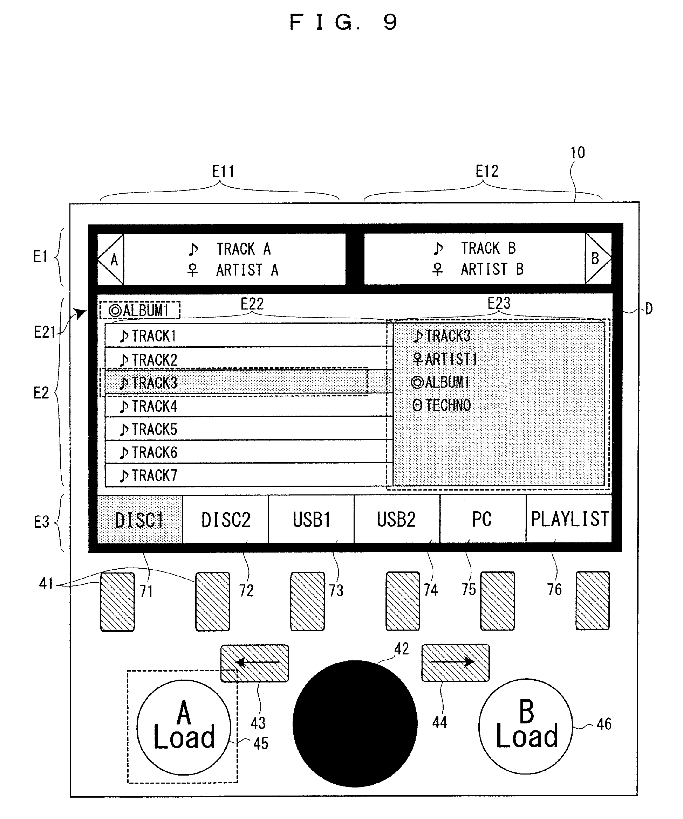

A state of the screen after transition will be explained with reference to FIG. 9, where the cursor is moved to two downward position from the state shown in FIG. 8 (where the "track 1" is designated by the cursor) by rotating the encoder 42 in a clockwise direction. When the selection candidates are changed by the movement of the cursor, ID3 information in the right window area E23 are changed according to the movement so as to display ID3 information of the selected candidate. Thus, a content to be a selected object is determined by the rotation of the encoder 42.

A state of the screen after transition will be explained with reference to FIG. 10, where the A-side load button 45 is pushed so as to set the content to be the selected object in the A-side reproduction mechanism 191 and the A-side operation mechanism 201 in the state shown in FIG. 9 (in the state that the "track 3" is designated by the cursor). Note that the contents of the "DISC 1" are recorded in MP3 data type, and the A-side load button 45 and the B-side load button 46 both are in a sortable state (lighting-on state).

When the content is sorted to either one of the A-side or the B-side reproduction/operation mechanisms, a symbol 81 showing the sort result ("(A)" in FIG. 10) is displayed (as a head mark) at a head of the track name. The content of the A-side display area E11 is changed to the title name and the artist name of the selected content. Therefore, the A-side display area E11 and the B-side display area E12 also function as display for showing the sort result.

In a case that a plurality of tracks can be spooled, the above example is applied in that the head mark is displayed when the load buttons 45 and 46 are pushed. On the other hand, in terms of the change of the A-side display area E11 or the B-side display area E12, timings for the change vary according to whether the contents reproduced by the corresponding reproduction mechanisms 191 and 192 or the contents being spooled exist or not. In other words, in a case that the contents being reproduced or spooled do not exist, the A-side display area E11 is changed when the load button 45 or 46 is pushed. On the other hand, when such contents exist, the A-side display area E11 is changed at the beginning of reproducing the content.

As described above, according to the reproducing apparatus 1 of the embodiment, the user can perform the selection operation and the sort operation for the contents only seeing the liquid crystal display D, because the content list for selecting the contents to be the reproduced objects of the two reproduction mechanisms 191, 192 and to be the operated objects of the two operation mechanisms 201, 202 is displayed on the same liquid crystal display D. This prevents erroneous operations and can enhance operability. Further, as the sort result of the contents is displayed on the same liquid crystal display D, the user can acknowledge that the content is reproduced by which reproduction mechanism 191 or 192 and can be operated by which operation mechanism 201 or 202, leading to high usability. Further, as the operation mechanisms (the jog dials 21A, 21B, and the faders 22A, 22B) for controlling reproduction of the content to be reproduced are provided separately in correspondence to each of the reproduction mechanisms 191, 192, independent reproduction control can be performed, thereby various music expressions can be achieved.

As the reproducing apparatus 1 has a plurality of reading mechanisms, it is possible to select contents to be the reproduced objects and the operated objects (objects for reproduction control) from a number of contents. Further, as the content list is generated per information recording medium 60, a great number of contents can be sorted per information recording medium 60, which makes it possible to retrieve the contents easily.

As reproduction/operation mechanisms which are sortable are indexed by a state of each of the load buttons 45, 46, the sort can be performed based on the index. Therefore, the user does not need to determine whether the mechanisms can be sorted or not with checking a data type of the content.

In the above embodiment, the operation method at the "ID3 browse" is explained mainly, but in the case of the "file browse", the ID3 information display and the sort destination display are the same.

Further, in the embodiment above, the reproducing apparatus 1 having the two reproduction mechanisms 191 and 192 is exemplified, but three or more reproduction mechanisms may be provided. Though only reproduction of audio signals is mentioned, it is also possible to adapt to reproduce video signals. Accordingly, it is possible to adapt the invention to DVJ equipment (equipment including DJ equipment used for acoustic performance by DJs and VJ equipment used for video performance by visual jockeys or video jockeys (VJs)).

The sort result is displayed as a head mark of each content in the content list and as character information on the A-side display area A11 and the B-side display area A12, but it may be possible, even in a case that a plurality of tracks can be spooled, to display the sort result to the A-side reproduction mechanism 191 and the A-side operation mechanism 201 (reproduction order 1: track 1, reproduction order 2: track 2,...) and the sort result to the B-side reproduction result 192 and the B-side operation mechanism 202 as character information on a predetermined area of the liquid crystal display D. Also, in the case that a plurality of tracks can be spooled, a reproduction order ("1", "2"...or "NEXT") may be displayed with the symbol ("A" or "B") showing a sort destination as a head mark of each content.

In the embodiment above, the reproduction unit 190 has the two reproduction mechanisms 191, 192, but one memory for internally storing the reproduced data may be provided, meaning that those may not necessarily be separated physically. In other words, only if two (a plurality of) contents can be reproduced simultaneously, only one reproduction mechanism may be necessary.

In the embodiment above, the switching method of the folder display type and the category display type with the browse switching button 31 is explained, but it may be possible to switch them selectively by displaying the folder and the category in a same line.

In the embodiment above, contents having MP3 type are explained, but other types such as AAC, WMA, WAV, MPX (X=2,4 etc), OGG, VQF may be used.

In terms of the sort result, the symbol ("A" or "B") showing the sort destination is displayed in the content list, but it may be possible to add other symbols (such as "1" or "2", "←" or "→", "<" or ">"). Also, it may possible to add text information such as "A-side" or "B-side" in place of the symbol. Thus, any type of added information may be used.

In a case that the liquid crystal display D is a color display, it may be possible to show the sort destination by color-coding the title name of the selected content. In this case, in terms of the reproduction mechanism display area E1, it is preferable that the sort destination be displayed by changing display colors of the A-side display area E11 and the B-side display area E12 so that the user can definitely acknowledge the sort destination. In this case, it is also preferable that the sort destination of the content be displayed as easily recognizable by setting the A-side with red and the B-side with blue in advance (or, to be recognized intuitively, each operation area 20A, 20B or jog dial 21A, 21B of the apparatus is colored with red and blue, or colors of characters and background of the A-side display area E11 and the B-side display area E12 are changed to red/blue by electric spectaculars of each color). Moreover, in terms of the sort result, it may be possible to display the sort destination by changing display modes such that the content title is displayed in blinking, a font thereof is changed.

Also, each unit and function of the reproducing apparatus 1 shown in the example above can be provided as a program. The program can also be stored and provided in a recording medium (not shown). Examples of such recording medium include: a CD-ROM, a flash ROM, a memory card (a compact flash (trade mark), a smart media, a memory stick, an SD card and the like), a compact disc, a magneto-optical disc, a digital versatile disk, a flexible disc, and a hard disc. Those can be used as the information recording medium 60 storing contents.

The configuration, the processing steps, functions and the like of the reproducing apparatus 1 may not be limited to the above embodiment, but may be modified suitably within the spirit and scope of the invention.

## Claims

1. A reproducing apparatus comprising:
a reading unit that reads an information recording medium recorded with a plurality of contents therein,
a reproduction unit that can reproduce two of the contents simultaneously,
an operation unit that is capable of reproduction control of the two contents reproduced by the reproduction unit,
a content list generation unit that generates a content list of a plurality of the contents,
a content list display unit that displays the generated content list on a display screen,
a content selection unit that selects contents to be operated objects by the two operation mechanisms from the displayed content list,
a content sort unit that sorts the contents read by the reading unit to the two operation mechanisms based on a selection result of the content selection unit, and
a sort result display unit that displays the sort result by the content sort unit on the display screen.

2. The reproducing apparatus according to claim 1,
wherein the reading unit includes a plurality of reading mechanisms, the content list generation unit generates the content list per a plurality of information recording media read by a plurality of the reading mechanisms, the content selection unit designates the information recording medium, displays the content list for the information recording medium on the content list display unit, and selects a content reproduced by the reproduction unit from the displayed content list.

3. The reproducing apparatus according to Claim 2, further comprising an operation mechanism index unit that indexes the operation mechanism sortable by the content sort unit based on a data type of the content read by each reading mechanism.

4. The reproducing apparatus according to Claim 2,
wherein a plurality of the reading mechanisms have one or more reading mechanisms that read the information recording medium recorded with the content which can be controlled in reproduction by either one of the two operation mechanisms.

5. The reproducing apparatus according to Claim 1,
wherein the sort result display unit shows the sorted operation mechanism in the content list displayed by the content list display unit.

6. The reproducing apparatus according to Claim 5,
wherein the sort result display unit shows the sorted operation mechanism by additional information to each content title or a display mode of each content title.

7. The reproducing apparatus according to Claim 1,
further comprising a display type selection unit that selects either one of a folder display type displaying the content list according to a hierarchy structure of the contents stored in the information recording medium and a category display type displaying the content list by category based on the additional information added to each content, wherein the content list display unit selectively displays the content list generated by the content list generation unit according to a selection result by the display type selection unit.

8. The reproducing apparatus according to Claim 1,
wherein the operation unit includes a jog dial that adjusts a reproduction state according to rotation amount of a rotating body thereof as operation mechanism.

9. The reproducing apparatus according to Claim 1,
wherein the content list display unit is disposed between the two operation mechanisms.

10. A program that causes a computer to function as each unit in the reproducing apparatus of claim 1.
